# EUROPÄISCHE PATENTSCHRIFT

(11) **EP 1 437 519 B1**
(45) Veröffentlichungstag und Bekanntmachung des Hinweises auf die Patenterteilung: **23.05.2007**
(21) Anmeldenummer: 04000197.6
(22) Anmeldetag: 08.01.2004
(51) Int. Cl.: F16D 29/00, F16D 25/08

(54) **Geberzylinder für Kupplungsausrücksysteme**
Master cylinder for clutch release system
Maître-cylindre pour système de debrayage

(30) Priorität: 09.01.2003 DE 10300424
(43) Veröffentlichungstag der Anmeldung: 14.07.2004
(73) Patentinhaber: LuK Lamellen und Kupplungsbau Beteiligungs KG, 77815 Bühl (DE)
(72) Erfinder: Ahnert, Gerd, 77880 Sasbach (DE); Norum, Viggo L., 3612 Kongsberg (NO)

(56) Entgegenhaltungen:
- EP-A- 0 898 088
- DE-A- 3 220 205
- DE-A- 4 320 204
- DE-A- 19 812 770

## Beschreibung

Die Erfindung betrifft eine Vorrichtung zur Betätigung einer Kupplung, insbesondere einer Kupplung in einem Kraftfahrzeug, mittels einer Betätigungseinrichtung. Die Betätigungseinrichtung besteht hierbei im Wesentlichen aus dem so genannten Nehmerzylinder, dem Geberzylinder und einer hydraulischen Strecke, die die beiden miteinander verbindet.

Es ist bekannt, Kupplungen in einem Kraftfahrzeug mittels Bauelementen zu betätigen, die hydraulisch beaufschlagbar sind. Zur unmittelbaren Kupplungsbetätigung dient ein Nehmerzylinder, der über eine hydraulische Strecke mit einem Geberzylinder verbunden ist. Eine derartige Betätigungsvorrichtung wird in der DE 198 12 770 A1 beschrieben, bei der aus den Figuren 3 und 5 der prinzipielle Aufbau ersichtlich ist.

Diesen Figuren ist zu entnehmen, dass der Geberzylinder mit einem Pedal verbunden ist, worüber dieser mit Kraft beaufschlagt werden kann. Dabei steht der Kolben des Geberzylinders in unmittelbarem Kontakt mit dem Pedal. Die auf das Pedal eingeleitete Kraft wird über die kreisförmige Stirn- bzw. Druckfläche des Kolbens an die hydraulische Strecke weitergegeben. Zur Realisierung der erforderlichen Betätigungskraft für die Kupplung ist die Druckfläche des Geberzylinders entsprechend zu dimensionieren. Somit steigt die Größe der erforderlichen Druckfläche proportional zur erforderlichen Betätigungskraft, woraus sich unterschiedliche Größen von Geberzylindern in Abhängigkeit der eingesetzten Kupplung ergeben.

Der Geberzylinder wiederum kann auf unterschiedliche Weise angetrieben werden. In einer ersten Möglichkeit wird er mittels eines Kupplungspedals betätigt. Eine weitere Möglichkeit ist der Antrieb über ein elektromotorisch betriebenes Exzentergetriebe. Auch kann der Kolben eines Geberzylinders, wie in der DE 43 20 204 A1 beschrieben, mittels einer elektromotorisch angetriebenen Gewindespindel betätigt werden.

Hierbei ist der Geberzylinder mit einem Elektromotor fest zu einer Baueinheit verbunden. Bei der um eine Drehachse rotierenden Motorwelle wird deren Drehbewegung in eine Verschiebebewegung des Kolbens im Geberzylinder umgesetzt. Die Motorwelle und der Geberzylinder sind gleichachsig hintereinander angeordnet, so dass die Getriebewelle als zur Motorwelle gleichachsiger Gewindetrieb ausgebildet ist. Die drehfest mit der Motorwelle verbundene Gewindespindel ist mit einer relativ zum Geberzylinder verdrehfest, axial verschiebbar geführten, mit dem Kolben verbundenen Spindelmutter verschraubbar.

Damit die Kraft beim Betätigen eines Geberzylinders - und damit letztendlich einer Kupplung - nicht allein durch den antreibenden Elektromotor oder die Muskelkraft erfolgen muss, ist in den Geberzylinder eine entsprechende Kompensationsfeder eingebaut, die beim Pressen des Geberkolbens mit ihrer Spannkraft beim Auspressen des Fluids (Hydrauliköl) hilft. Diese Kompensationsfeder wirkt auf die dem Fluid abgewandte Stirnseite des Kolbens. Gleichzeitig wirkt auf diese Fläche auch das Pleuel oder die Gewindespindel des Geberzylinder-Antriebes ein. Um die Kupplung ausrücken zu können, ist eine bestimmte Kraft erforderlich, die vom Kolben des Geberzylinders in die hydraulische Strecke weitergeleitet werden muss. Allerdings sind dabei auch die Platzverhältnisse im Geberzylinder zu berücksichtigen. Bei der Druckkraftbeaufschlagung des Kolbens des Geberzylinders durch einen Elektromotor ist die Größe des Spindeldurchmessers zu berücksichtigen, der im Zylindergehäuse bereits einen bestimmten Platz einnimmt. Da dieser bei dieser Antriebsart bereits vorgegeben ist und aus Festigkeitsgründen nicht verkleinert werden kann, muss zur Weiterleitung der Ausrückkraft entweder der Weg des Kolbens und damit der Geberzylinder verlängert oder die Stirnfläche des Kolbens verkleinert werden, um die genannten Teile räumlich anordnen zu können. Bei der in der DE 43 20 204 A1 vorgestellten Lösung ist der Durchmesser des Kolbens und damit die Stirnfläche (Druckfläche) des Kolbens jedoch derart groß, dass der durch die Antriebskraft (Pedalkraft, Elektromotor) erzeugte Druck am Ausgang des Geberzylinders vermindert an das hydraulische System und damit an den Nehmerzylinder zur Ausrückung der Kupplung weitergeleitet wird.

Die DE 43 20 205 A1 zeigt einen Geberzylinder mit einer elektrisch angetriebenen Spindel, die axial benachbart zum durch den Geberzylinderkolben gebildeten Druckraum ist. Weiterhin offenbart die EP 0 898 088 A2 offenbart einen mittels eines Elektromotors angetriebenen Geberzylinder, dessen Kolben kreisringförmig angeordnet ist und eine Druckkammer bildet, die axial benachbart zur Spindel angeordnet ist. Beide Anordnungen benötigen einen vergleichsweise großen axialen Bauraum.

Es ist deshalb Aufgabe der Erfindung, den Druck, ausgehend von einer auf den Kolben des Geberzylinders wirkenden Antriebskraft, in einem hydraulischen System nicht nur ohne Abfall weiter zu leiten sondern sogar zu erhöhen, ohne die vorgegebene Bauraumgröße des Geberzylinders zu verändern.

Erfindungsgemäß wird die Aufgabe durch die Merkmale des Anspruchs 1 gelöst, wobei der Kolben des Geberzylinders in besonderer Weise gestaltet wird. In einer ersten Ausgestaltung des Geberkolbens ist dieser an der Stirnseite, die dem Fluid zugewandt ist, kreisringförmig gestaltet. Mit anderen Worten: der Geberkolben weist hier einen rohrförmigen Querschnitt auf. Dieser rohrförmige Querschnitt taucht zugleich in einen äußeren Hohlzylinder und in einen inneren, vollen Zylinder ein. Der rohrförmige Kolben ist mittels Dichtungen sowohl gegenüber dem Hohlzylinder, als auch gegenüber dem Vollzylinder abgedichtet. Der Rohrkolben hat den entscheidenden Vorteil, dass die Wandstärke dieses Kolbens bis zu Werten unter einem Millimeter reduziert werden kann, wobei er aber durch seinen rohrförmigen Querschnitt, dennoch eine hohe mechanische Stabilität aufweist. Die mechanische Stabilität kann fast auch beliebig gesteigert werden, indem beispielsweise ein großer Außen- und/oder Innendurchmesser für den Kolben gewählt werden.

Um einen höheren Systemdruck bei gleicher Antriebsleistung zu erhalten, könnte man auch einen Kolben mit einem sehr kleinen Durchmesser gestalten. Dadurch ist ein höherer Druck möglich. Ein derartiger Kolben aus Vollmaterial hat aber den Nachteil, dass er bei entsprechenden Kräften nicht knick- und/oder biegestabil ist. Würde man beispielsweise zur Erhöhung zur mechanischen Stabilität eines derartigen - gewissermaßen stiftförmigen - Kolbens diesen mit einem zweiten stiftförmigen Kolben verbinden, so hätte diese Lösung den Nachteil, dass nicht nur zwei Zylinderräume in dem Gehäuse des Geberzylinders geschaffen werden müssten, sondern dass diese auch noch genau achsparallel realisiert werden müssten. Ein weiterer Nachteil bestünde darin, dass diese zwei stiftförmigen Kolben je mit einem Dichtungssystem versehen werden müssten, was wiederum aufwändig ist.

In einer zweiten Ausgestaltung der Erfindung ist der Geberkolben nicht rohrförmig, sondern gestuft ausgeführt. Der Kolben kann hierbei als Vollmaterial ausgebildet sein. Ein gestufter Kolben arbeitet in der Weise, dass in einem ebenfalls gestuften Zylinder sich diese Kolben bewegen. Der kleinere Durchmesser des Geberkolbens bewegt sich in den kleineren Durchmesser des Geberzylinders und der größere Geberkolben-Durchmesser bewegt sich in dem größeren Geberzylinder-Durchmesser. Beide Durchmesserstufen sind zweckmäßigerweise gegeneinander abgedichtet. Ist nun der Geberkolben in die entsprechende, beschriebene Position gebracht worden, so bildet sich zwischen dem größeren Geberzylinder-Durchmesser und dem kleineren Geberkolben-Durchmesser ein ringförmiger Raum, der mit einem Fluid gefüllt ist. Wird nun beispielsweise der Geberkolben in Richtung zum kleineren Geberzylinder-Durchmesser bewegt, so wird das Fluid aus einem ringförmigen Spalt über einen dort angeordneten Abgang in das Hydrauliksystem gepresst. Ein derartiger Kolben hat den Vorteil, dass er, auch wenn er keinen Vollquerschnitt aufweist - wie hier später noch gezeigt - wird, eine hohe Festigkeit aufweist.

In einer dritten Lösung befindet sich in einem äußeren Geberkolben zusätzlich ein innerer Geberkolben. In einer ersten Phase des Pressens bewegen sich beide Kolben synchron voran. Ist ein bestimmter Druck in dem Hydrauliksystem erreicht, so fährt anschließend nur noch der innere Kolben weiter. Der äußere Kolben wird durch eine Rücklaufsperre während des Weiterpressens des kleineren Kolbens durch eine Rücklaufsperre daran gehindert, sich wieder zurückzubewegen. Im Zusammenhang mit der Figurenbeschreibung werden noch weitere Details erläutert.

Nach der Erfindung wird der Geberzylinder (genauer gesagt der Kolben des Geberzylinders) mittels eines Elektromotors angetrieben. Der Antrieb mittels eines Elektromotors ist deshalb vorteilhaft, weil durch das Vorhandensein eines Bordnetzes in einem Kraftfahrzeug, diese Antriebsmöglichkeit in einfacher Form zur Verfügung steht. Außerdem gibt es eine Vielzahl von - speziell für die Kraftfahrzeugindustrie entwickelte - Elektromotoren, so dass man inzwischen aus einem umfangreichen Sortiment von Kfz-Elektromotoren auswählen kann.

Nach der Erfindung wird der Elektromotor mittels eines Gewindegetriebes mechanisch an den Geberkolben angebunden. Das Gewindegetriebe besteht aus einer Gewindespindel und einer Gewindemutter, wobei eines dieser beiden Teile in seiner Drehmöglichkeit behindert und das andere Teil gedreht wird, wodurch dann insgesamt durch das Drehen des drehbaren Teiles aus einer rotatorischen Bewegung eine translatorische Bewegung erzeugt wird. In einer Ausgestaltung dieses Gewindegetriebes ist die Gewindespindel an der Rotorachse des Elektromotors und die Gewindemutter an dem Geberkolben angebracht. Diese Anordnung ist aber nicht zwingend erforderlich, denn - je nachdem wie es konstruktive Gesichtspunkte erforderlich machen - kann auch die Gewindemutter an der Drehachse des Elektromotors angebracht sein und die Gewindespindel an dem Geberkolben. In einer vorteilhaften Ausgestaltung der Erfindung, ist aber die Gewindespindel nicht nur an der Rotorachse des Elektromotors angebracht, sondern sie ist sogar auch einstückig gefertigt. Das heißt, die Rotorachse des Elektromotors ist länger ausgeführt als sie sonst sein müsste und ist an diesem überstehenden Ende mit einem Gewinde versehen.

Unter Gewinde ist im Rahmen der vorliegenden Erfindung nicht nur ein genormtes Bewegungs- oder Befestigungsgewinde zu verstehen, sondern unter Gewinde ist jede Form zu verstehen, welche aus einem inneren und einem äußeren Teil besteht und durch eine Relativdrehbewegung eine translatorische Bewegung erzeugt.

Wie schon erwähnt, ist mit einem Elektromotor der Geberkolben angetrieben werden. In einer weiteren vorteilhaften Ausgestaltung der Erfindung ist dieser Elektromotor als Schrittmotor ausgebildet. Dieses ist deshalb vorteilhaft, weil mit einem Schrittmotor und einer entsprechenden Ansteuerung ein definierter Drehwinkel bewerkstelligt werden kann. Dieser Drehwinkel kann Bruchteile und/oder definierte Vielfache einer einzigen Bewegung ausmachen. Aus derart definierten Drehbewegungen resultieren durch eine Anbindung des Geberkolbens mittels eines Gewindegetriebes definierte Kolbenhübe des Geberkolbens.

Aber auch der Antrieb mittels eines Gleichstrommotors kann vorteilhaft sein, denn er benötigt keine aufwändige Ansteuerung und ist deshalb kostengünstig. Will man eine Information über den tatsächlich von dem Elektromotor zurückgelegten Weg erhalten, so kann man sowohl beim Gleichstrommotor als auch beim Schrittmotor mittels eines Drehwinkelsensors den tatsächlich zurückgelegten Drehwinkel erfassen. In einer vorteilhaften Ausgestaltung der Erfindung ist dieser Drehwinkelsensor als Hall-Sensor ausgestaltet.

An Stelle einer Drehwinkel-Sensorik - oder aber auch zusätzlich - kann der Geberkolben mit einem Absolut-Wegmesssystem ausgestattet sein. Ein Absolut-Wegmesssystem kann sehr vorteilhaft sein, weil nach einem - beispielsweise kurzzeitigen - Ausfallen der Ansteuerung eines Elektromotors, keine Information mehr vorliegt, in welcher Stellung der Geberkolben zuletzt stand. Ein Absolut-Wegmesssystem liefert vorteilhafter Weise in jeder Situation die tatsächliche Position des Geberkolbens, sodass ein Fahren des Geberkolbens über eine seiner zulässigen Endpositionen hinaus, nicht möglich ist. Das Absolut-Wegmesssystem kann beispielsweise in der Form aufgebaut sein, indem ein Ferritkern, welcher mit dem Geberkolben gekoppelt ist, in eine ortsfeste Spule eintaucht. "Ortsfest" bedeutet hier, dass die Spule mit dem Gehäuse des Geberzylinders oder in irgendeiner anderen Form mit den ruhenden Teilen des Geberzylinders verbunden ist. Nicht nur die bisher beschriebene Kinematik, sondern auch die Dynamik eines Geberkolbens kann für die Betätigung einer Kupplung wichtig sein, denn die Wegzeitdiagramme des Kupplungshubes können je nach Anwendungsfall sehr unterschiedlich sein und die Wegzeitdiagramme sind durch den Geberkolben und seinem Antrieb zu erfüllen. Deshalb ist es besonders vorteilhaft, wenn der Elektromotor bezüglich seines Drehmomentes oder seiner Drehzahl in seinem zeitlichen Verlauf steuer- oder auch sogar regelbar ist.

Durch den Betrieb des Fahrzeuges - insbesondere durch den Betrieb der Kupplung - kommt es zur Erwärmung zur Hydraulikflüssigkeit. Bei einer Erwärmung der Hydraulikflüssigkeit dehnt sich der Nehmerzylinder - also der Zylinder, der der Kupplung zugewandt ist - in Richtung Kupplung aus. Dadurch wird die Kupplung zumindest teilweise betätigt. Dieses führt gegebenenfalls zu einem unbeabsichtigten Schlupfen der Kupplung, wodurch der Kupplungsbelag Schaden nehmen kann. Aus diesem Grunde ist es auch für die vorliegende Erfindung von Bedeutung, wenn der Geberzylinder mit einer so genannten Schnüffeleinrichtung ausgerüstet wird. Diese Schnüffeleinrichtung würde in der Ruhestellung des Geberzylinders, die erwärmte, ausgedehnte Hydraulikflüssigkeit in ein Ausgleichsgefäß strömen lassen. Kommt es beispielsweise in einer längeren Ruhepause des Fahrzeuges zu einem Abkühlen der Hydraulikflüssigkeit, so saugt das System selbsttätig aus dem Ausgleichsbehälter Hydraulikflüssigkeit nach. In einer vorteilhaften Ausgestaltung der Erfindung, ist ein Innenraum des Geberkolbens selbst der Ausgleichsbehälter. In der Figurenbeschreibung wird dieses noch ausführlich erläutert werden.

Die Erfindung soll nun anhand der Figuren näher erläutert werden. Es zeigen:
- Figur 1: einen Geberzylinder gemäß dem Stand der Technik;
- Figur 2 bis 7: verschiedene Ausführungsbeispiele von erfindungsgemäßen Geberzylindern;
- Figur 8: einen rohrförmigen Geberkolben mit Schnüffeleinrichtung;
- Figur 9 und 12: weitere Ausführungsbeispiele von Geberkolben mit Schnüffeleinrichtung;
- Figur 13a und b: detailreiche Darstellung eines stufigen Geberkolbens;
- Figur 14a und b: detailreiche Darstellung eines rohrförmigen Geberkolbens.

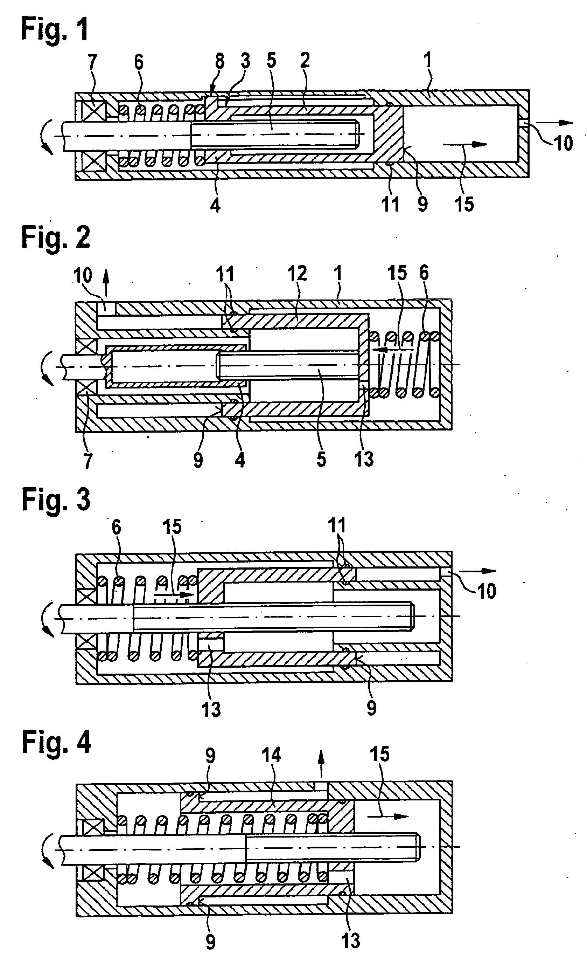

Im Zusammenhang mit den Figuren 1 bis 7 muss vorausgeschickt werden, dass teilweise umlaufende Linien weggelassen wurden, um die Darstellungen übersichtlicher zu gestalten. Die Bezugszeichen haben in allen Figuren die gleiche Bedeutung.

In der Figur 1 ist schematisch ein Geberzylinder für den Stellantrieb einer Kraftfahrzeug-Reibungskupplung aus dem Stand der Technik zu sehen. In einem Geberzylinder-Gehäuse 1 ist ein zylindrischer Geberkolben 2 angeordnet. Der Geberkolben 2 wird mittels eines Gewindegetriebes 3 in axialer Richtung bewegt. Das Gewindegetriebe 3 besteht aus einer Gewindemutter 4 und einer Gewindespindel 5, welche in einem Lager 7 geführt und abgestützt wird. Wenn sich die Gewindespindel 5 dreht, so ergibt sich für den Geberkolben 2 eine translatorische Bewegung, da der Geberkolben 2 wegen einer Verdrehsicherung 8 an einer Drehbewegung gehindert wird. Bewegt sich der Geberkolben 2 nach rechts, so presst die Druckfläche 9 das Fluid (Hydrauliköl) zum Anschluss 10 (für eine hydraulische Strecke) hinaus. Ein Druckweg 15 wird hierbei zurückgelegt. Eine Dichtung 11, die entweder im Gehäuse 1 oder im Geberkolben 2 angeordnet sein kann, reduziert einen möglichen Leckage-Ölstrom. Damit die hydraulische Presskraft nicht allein durch die Drehbewegung an der Gewindespindel 5 aufgebracht werden muss, ist auf der der Druckfläche 9 entgegen gesetzten Stirnfläche des Kolbens eine Druckfeder - eine so genannte Kompensationsfeder 6 - angeordnet. Mit dieser Kompensationsfeder 6 wird zu Beginn des Hubes zunächst eine starke Kraft ausgeübt. Mit zunehmender Bewegung des Geberkolbens 2 nach rechts, lässt aber die Kraft der Kompensationsfeder 6 wegen ihrer Entspannung nach.

Beim Stand der Technik entspricht die Größe der Stirnfläche mit der Gewindemutter 4 und der Kompensationsfeder 6 im Wesentlichen der Druckfläche 9 des Geberkolbens 2 und ergibt sich aus den erforderlichen Durchmessern der Kompensationsfeder 6 und der Gewindespindel 5. Dieser Umstand ist ein Nachteil, da sich so keine kleinen Druckflächen realisieren lassen. Durch kleinere Druckflächen lassen sich bei gleich bleibender Antriebsleistung aber höhere Drücke realisieren.

Mit der Figur 2 wird ein erstes Beispiel eines erfindungsgemäßen Geberzylinders gezeigt. Der Geberkolben 12 ist hier rohrförmig gestaltet. Zwei Dichtungen 11 dichten ihn sowohl innen, als auch außen ab. In diesem Ausführungsbeispiel ist die Gewindespindel 5 drehfest am Geberkolben 12 angebracht und taucht je nach Drehrichtung der Gewindemutter 4 unterschiedlich stark in sie ein. Die Kompensationsfeder 6 ist an dem Ende des Kolbens angeordnet, welches der Lagerung 7 der Gewindemutter 4 abgewandt ist. Wird in diesem Ausführungsbeispiel Fluid ausgepresst, so ist dieses mit einem "Ziehen" des Geberkolbens 12 verbunden. Daraus ergibt sich auch, dass der Anschluss 10 nahe der Lagerung 7 der Gewindemutter 4 platziert ist.

Der rohrförmige Geberkolben 12 ist in der Figur 2 sogar topfförmig dargstellt. Der "Topfboden" ist hierbei die Fläche, an der die Gewindespindel 5 angreift. Bewegt sich nun der Kolben 12 beispielsweise nach links, so würde das linksseitige Volumen (ggf. mit Öl und/oder Luft erfüllt) komprimiert werden. Entsprechend würde das rechtsseitige Volumen entspannt werden. Durch diese Volumen-Änderungsarbeit wäre für den Antrieb des Geberkolbens 12 zusätzliche Arbeit zu leisten. Deshalb ist hier vorteilhafter Weise eine Bohrung 13 für einen Druckausgleich angebracht worden. Auch bei der Anbindung der Gewindemutter 4 an einen Drehantrieb könnte eine Bohrung 13 für den Druckausgleich angebracht sein. Erfolgt diese Anbindung aber nicht mittels eines rohrförmigen Verbindungsteiles, sondern mittels einer offenen Struktur - beispielsweise einer Gitterstruktur oder Speichen - so benötigt man keine Bohrung 13.

In den Figuren 2 bis 14 ist nirgends eine Verdrehsicherung 8 für den Geberkolben 12 oder 14 gezeigt. Aber auch für diese Ausführungsbeispiele ist sie vorteilhaft, denn ein Mitdrehen des Geberkolbens würde eine eindeutige Zuordnung der Drehbewegung zur translatorischen Bewegung erschweren. Nur ein Absolut-Wegmesssystem könnte dann noch die tatsächliche Position des Kolbens ermitteln. Im Folgenden ist auch anzumerken, dass Bezugszeichen einer Figur, die bei der Beschreibung einer Figur nicht erwähnt wurden, sich aus anderen Figuren herleiten lassen, da sie in allen Figuren die gleiche Bedeutung haben.

In der Figur 3 liegt der Anschluss 10 dem Ende gegenüber, an dem das Lager 7 angeordnet ist. Da die Kompensationsfeder 6 beim Auspressen des Fluids die Kolbenbewegung mit unterstützen soll, ist sie zwischen dem Lagerschild und dem "Topfboden" angeordnet. Wie man schon durch den Vergleich der Figuren 2 und 3 sehen kann, sind eine Vielzahl von Anordnungen möglich.

Mit der Figur 4 wird ein weiterer Typ eines erfindungsgemäßen Geberkolbens offenbart. Dieser Kolben 14 ist stufig gestaltet. Diese Stufe ergibt sich dadurch, dass zwischen zwei außen liegenden Durchmessern des Kolbens 14 eine ringförmige Kammer gebildet wird. Durch eine geeignete Stufung der Durchmesser kann ein sehr kleines Volumen dosiert werden. Es ließen sich Durchmesserunterschiede beispielsweise von nur wenigen Zehntel Millimetern gestalten. Eine derart geringe Wandstärke wäre bei einem rohrförmigen Kolben 12 nur unter Schwierigkeiten realisierbar.

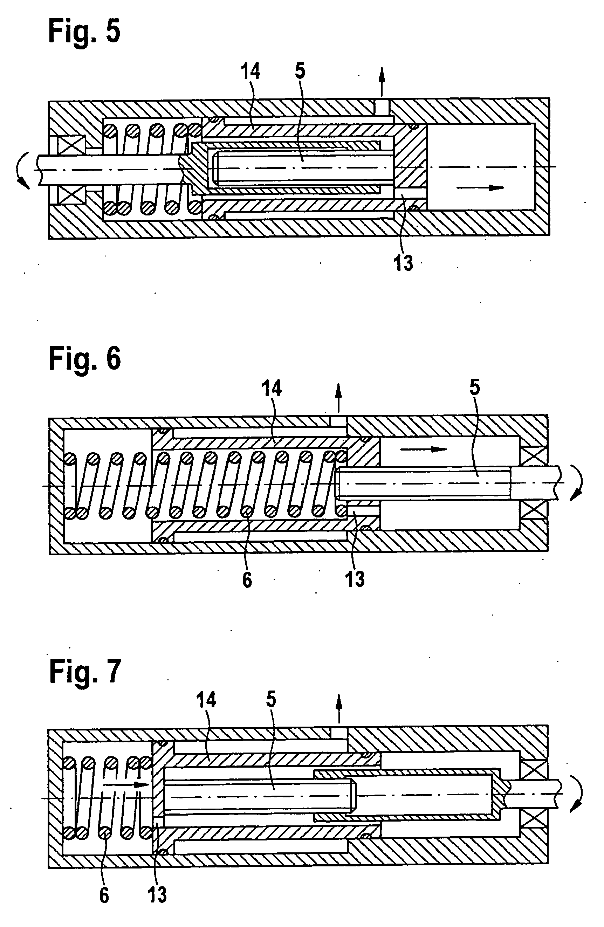

Auch bei den stufenförmigen Geberkolben 14 lassen sich eine Vielzahl von Varianten realisieren, wie den Figuren 5 bis 7 zu entnehmen ist. Je nachdem, ob die Gewindespindel 5 oder die Gewindemutter 4 drehend ausgebildet ist oder ob zum Auspressen des Fluids der Geberkolben 14 gedrückt oder gezogen wird. Es soll an dieser Stelle hervorgehoben werden, dass das jeweils drehbare Teil (Gewindemutter oder Gewindespindel) nicht als separates Bauteil, sondern auch einstückig mit einer Rotorachse - beispielsweise mit der Rotorachse eines Elektromotors - gestaltet sein kann.

Der Nehmerzylinder und der Geberzylinder sind mittels der hydraulischen Strecke ein Kommunizierendes System. Die dem Fluid zugewandten Oberflächen der Kolben begrenzen das System. Dehnt sich beispielsweise das Fluid durch Erwärmung aus und eine der zugewandten Oberflächen ist bereits in ihrem hinteren Anschlag (z.B. Geberkolben), so würde der Nehmerkolben in Richtung Kupplung wandern und dadurch die Kupplung betätigen. Bei einem Schrumpfen des Fluids ergeben umgekehrte Probleme. Deshalb benötigt man eine Ausgleichsmöglichkeit für das Fluid, wenn die Kupplungsbetätigungseinrichtung im Ruhezustand ist. Der Ausgleich des Fluids wird auch Schnüffeln genannt. Hierbei befindet sich der Geberkolben 12, 14 in einer Stellung, in der er eine Schnüffelöffnung 18 im Geberzylinder-Gehäuse 1 freigibt. Die Schnüffelöffnung 18 ist mit einem Ausgleichsgefäß verbunden. Wenn der Geberkolben 12, 14 betätigt wird, dann muss zunächst eine Dichtung 11 passiert werden, die den Druckraum zur Schnüffelöffnung hin abdichtet. Dadurch bleibt das eingesperrte FluidVolumen konstant und kann auch nicht über die Schnüffelöffnung 18 in den hier nicht dargestellten Ausgleichsbehälter strömen. Damit die entsprechende Dichtung 11 nicht durch die an ihr vorbeifahrende Geberkolben-Kante beschädigt werden kann, ist diese Kante - die so genannte Schnüffelkante 19 - mit einer umlaufenden Schräge und/oder mit einer Abrundung versehen.

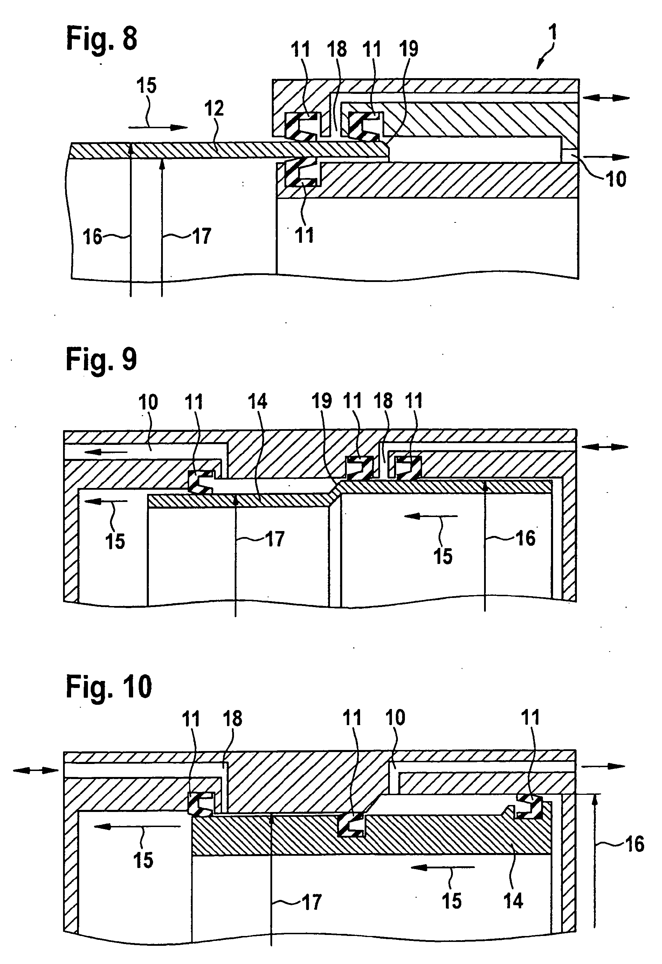

Mit den Figuren 8 bis 12 werden verschiedene Ausgestaltungen von Schnüffelöffnungen 18 und Schnüffelkanten 19 gezeigt. In der Figur 8 handelt es sich um eine Ausgestaltung in Verbindung mit einem rohrförmigen Geberkolben 12. In den Figuren 9 und 10 ist ein stufiger Geberkolben 14 dargestellt.

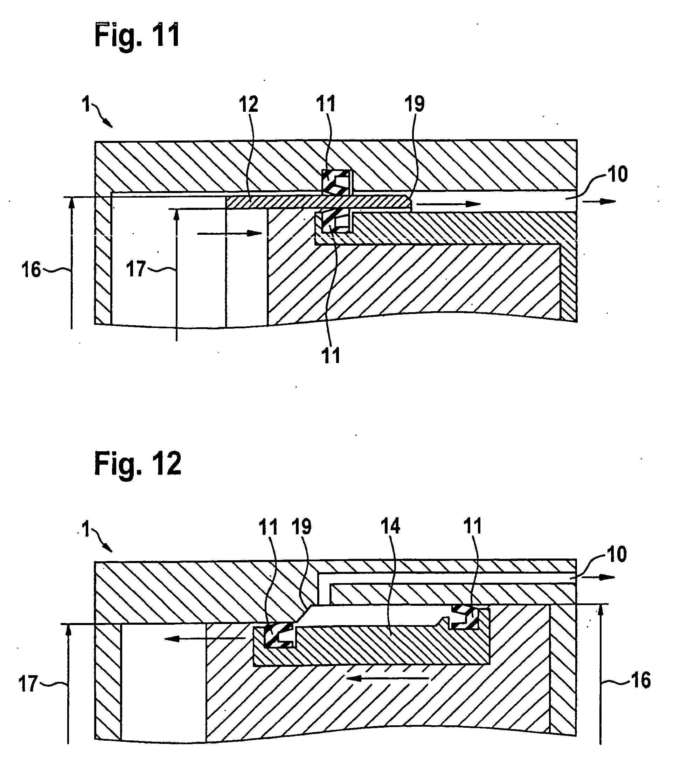

In den Figuren 11 und 12 ist je ein Halbschnitt eines Geberzylinders zu sehen, der ohne eine Schnüffelöffnung gestaltet ist. Ein Ausgleich des Fluids erfolgt in der Figur 11 in der Weise, dass der Geberkolben 12 nach oben kurz über die beiden Dichtungen hinaus gezogen wird. Durch eine geeignete Lage des Geberzylinder-Gehäuses 1 - beispielsweise wie hier gezeigt, senkrecht - steht dann der Anschluss 10 mit dem Fluid in Verbindung. Bei einem erwärmten und damit expandierten Fluid kann dieses dann in den Vorratsraum strömen. Bei einem erkalteten Fluid kann dieses in den Raum zwischen Geberkolben 12 und Nehmerkolben einströmen. Das Schnüffeln dient aber auch dazu, um mögliche Gasblässchen in der hydraulischen aus derselben zu entfernen.

In der Figur 12 ist der Geberkolben 14 stufenförmig ausgestaltet. Fährt der Geberkolben 14 weiter nach unten, so gleitet die obere Dichtung 11 an der Schnüffelkante 19 vorbei. Hier ist dann ebenfalls der Raum zwischen Geberkolben 14 und dem Nehmerzylinder für einen Fluidaustausch offen.

Damit der Fluidaustausch erleichtert wird und auch damit die Dichtungen 11 besser vor Beschädigungen geschützt werden, sind die Schnüffelkanten 19 häufig in besonderer gestattet. Zum einen können die Schnüffelkanten als umlaufende Phase ausgebildet sein. In einer weiteren Ausgestaltung können die Schnüffelkanten 19 aber auch mit sternförmig angeordneten - meist sogar ausgerundeten - Ausnehmungen versehen sein. Häufig werden jedoch beide Lösungen miteinander kombiniert.

Den in den Figuren 11 und 12 dargestellten Versionen der Geberkolben 12, 14 ist gemeinsam, dass sie ohne eine Schnüffelöffnung 18 auskommen. Dieses ist vorteilhaft, weil dadurch Fertigungsaufwand und damit Kosten verringert werden können.

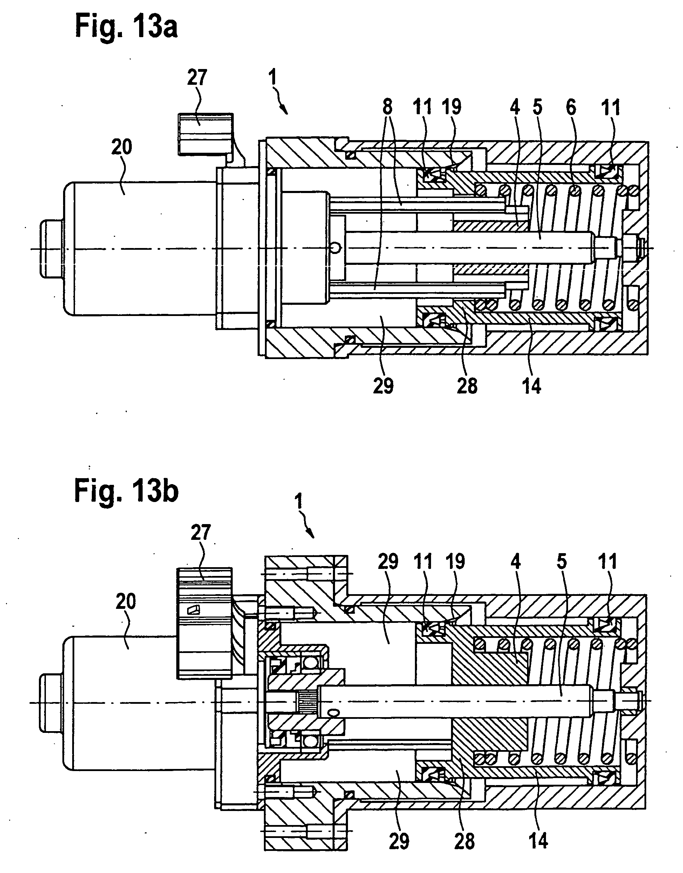

Die Figuren 13a und 13b zeigen verschiedene, um die Längsachse des Geberzylinders geschwenkte, Detail-Schnitte ein und desselben Geberzylinders. Hier ist der Geberzylinder mit einem Elektromotor 20 zu sehen. Der Elektromotor 20 ist mittels eines elektrischen Anschlusses 27 sowohl mit elektrischer Energie, als auch mit Steuerleitungen verbunden. Das Geberzylinder-Gehäuse 1 ist an der Stelle, an der der Pfeil mit dem Bezugszeichen gesetzt ist, teilbar. Der Anschluss 10 für die hydraulische Strecke ist in den Figuren 13a und 13b nicht zu sehen, weil er entweder von dem geschnittenen Teil verdeckt wird oder weil er vor der Schnittebene läge und deshalb nicht darstellbar ist. Der Geberkolben 14 ist hier wieder stufenförmig ausgebildet. Die Gewindespindel 5 greift in eine Gewindemutter 4, die wiederum in dem "Kern" des Geberkolbens 14 angeordnet ist. In der Figur 13a kann man sehen, dass zusätzlich in dem "Kern" - oberhalb und unterhalb der Mutter 4 - achsparallele Öffnungen angeordnet sind. In diese Öffnungen greifen Verdrehsicherungen 8 ein, die drehfest mit der linken Spindel-Lagerung verbunden sind. Durch diese Lösung kann trotz möglicher Reibungskräfte zwischen Gewindemutter 4 und Gewindespindel 5, der Geberkolben 14 im Wesentlichen keine Drehbewegung ausüben, wodurch die axiale Komponente des Gewindegetriebes im vollen Umfang auch als axialer Weg des Geberkolbens 14 wiedergegeben wird.

Wie den Figuren 13a und 13b zu entnehmen ist, ist der stufenförmige Geberkolben 14 - zur Aufnahme der Kompensationsfeder und bei einer linksseitigen Position des Kolbens zur Aufnahme der linksseitigen Spindel-Lagerung - innen hohl. Wegen der Öffnungen für die Verdrehsicherungen 8 im "Kern", besteht eine Durchlässigkeit - zum Beispiel für eine Fluid - von der rechten Hälfte des Geberzylinders in die linke Hälfte und umgekehrt. Deshalb kann das Innere des Geberzylinder-Gehäuses 1 auch als Vorratsbehälter für das Fluid genutzt werden. Damit aber ein erfolgreiches "Schnüffeln" möglich ist, muss das Geberzylinder-Gehäuse 1 im Wesentlichen senkrecht angeordnet werden. Wichtig ist hierbei, dass die Dichtkante der linken Dichtung 11 (in der vertikalen Position des Geberzylinder-Gehäuses dann der oberen Dichtung) vollständig mit Fluid bedeckt ist, damit keine Luft oder ein anderes Gas in die hydraulische Strecke gelangen kann.

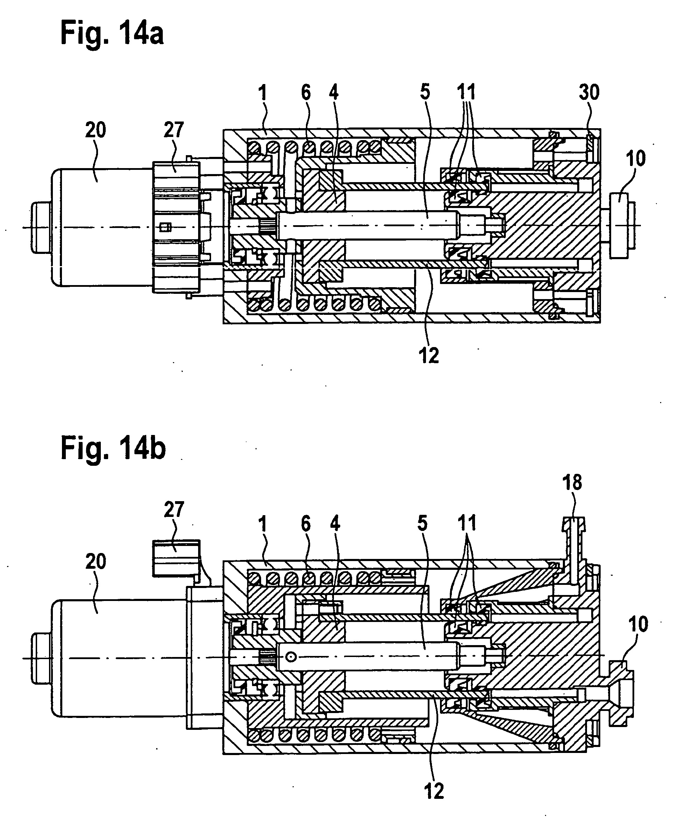

Mit den Figuren 14a und 14b wird nun ein Geberzylinder mit einem rohrförmigen Geberkolben 12 in zwei verschiedenen detaillierten Axialschnitten gezeigt. Der Innenraum des Gehäuses wird nun allerdings nicht als Vorratsbehälter für das Fluid genutzt, sondern das Fluid gelangt aus einem nicht dargestellten Vorratsbehälter über die Schnüffelöffnung 18 in den Bereich zwischen die Dichtungen 11. Im Gegensatz zu den Figuren 13a und 13b ist hier das Geberzylinder-Gehäuse 1 nicht geteilt, sondern hier ist das Endstück des Geberzylinders mit dem rohrförmigen Hubraum als separate Baugruppe ausgestaltet, die mittels eines Sicherungsringes 30 in dem Geberzylinder-Gehäuse gehalten wird.

### Bezugszeichenliste

- 1: Geberzylinder-Gehäuse
- 2: Geberkolben (Druckfläche Vollkreis)
- 3: Gewindegetriebe
- 4: Gewindemutter
- 5: Gewindespindel
- 6: Kompensationsfeder
- 7: Lager
- 8: Verdrehsicherung
- 9: Druckfläche
- 10: Anschluss für hydraulische Strecke
- 11: Dichtung
- 12: Geberkolben (rohrförmig)
- 13: Bohrung für Druckausgleich
- 14: Geberkolben (stufenförmig)
- 15: Druckweg des Geberkolbens
- 16: D-außen
- 17: D-innen
- 18: Schnüffelöffnung
- 19: Schnüffelkante
- 20: Elektromotor
- 21: äußerer Geberkolben
- 22: innerer Geberkolben
- 23: Rücklauf-Sperre (linearer Freilauf)
- 24: Doppeldichtung
- 25: Pressfeder
- 26: Traverse
- 27: elektrischer Anschluss
- 28: "Kern"
- 29: Vorratsraum
- 30: Sicherungsring

## Patentansprüche

1. Vorrichtung zur Betätigung einer Kupplung, insbesondere einer Kupplung in einem Kraftfahrzeug mittels einer Kupplungsbetätigungseinrichtung, die im wesentlichen aus einem auf die Kupplung einwirkenden Nehmerzylinder, einem Geberzylinder (1), in denen jeweils ein Kolben geführt wird und einer hydraulischen Strecke besteht, die den Geberzylinder (1) mit dem Nehmerzylinder verbindet, und die hydraulisch beaufschlagte Stirnseite des Geberkolbens (2) des Geberzylinders (1) kreisringförmig ausgebildet ist, **dadurch gekennzeichnet, dass** der Geberkolben (2) elektromotorisch angetrieben wird und die Anbindung zwischen Elektromotor (20) und Geberkolben (2) mittels eines Gewindegetriebes (3) erfolgt und die Abtriebswelle des Elektromotors (20) eine radial außerhalb des Antriebs vom Geberzylinder (2) gebildete Druckkammer axial überlappt.

2. Vorrichtung nach Anspruch 1, **dadurch gekennzeichnet, dass** das Gewindegetriebe (3) in der Form ausgestaltet ist, dass an dem Elektromotor (20) die Gewindespindel (5) und an dem Geberkolben (2) die Gewindemutter (4) angeordnet ist.

3. Vorrichtung nach Anspruch 1, **dadurch gekennzeichnet, dass** das Gewindegetriebe (3) in der Form ausgestaltet ist, dass an dem Elektromotor (20) die Gewindemutter (4) und an dem Geberkolben (2) die Gewindespindel (5) angeordnet ist.

4. Vorrichtung nach Anspruch 2, **dadurch gekennzeichnet, dass** die Gewindespindel (5) oder die Gewindemutter (4) einstückig an der Rotorachse des Elektromotors (20) angeformt ist.

5. Vorrichtung nach einem der Ansprüche 1 bis 4, **dadurch gekennzeichnet, dass** der Elektromotor (20) als Schrittmotor ausgebildet ist.

6. Vorrichtung nach einem der Ansprüche 1 bis 4, **dadurch gekennzeichnet, dass** der Elektromotor (20) als Gleichstrommotor ausgebildet ist.

7. Vorrichtung nach einem der Ansprüche 1 bis 6, **dadurch gekennzeichnet, dass** der Elektromotor (20) mit mindestens einem Drehwinkel-Sensor ausgerüstet ist.

8. Vorrichtung nach Anspruch 7, **dadurch gekennzeichnet, dass** der Drehwinkel-Sensor als Hall-Sensor ausgestattet ist.

9. Vorrichtung nach einem der Ansprüche 1 bis 8, **dadurch gekennzeichnet, dass** dem Geberkolben (2) ein Absolut-Wegmesssystem zugeordnet ist, welches die axiale Position des Gerberkolbens (2) erfasst.

10. Vorrichtung nach einem der Ansprüche 1 bis 9, **dadurch gekennzeichnet, dass** der Elektromotor (20) bezüglich Drehmoment und/oder Drehzahl über die Zeit steuer- oder regelbar gestaltet ist.

11. Vorrichtung nach einem der Ansprüche 1 bis 10, **dadurch gekennzeichnet, dass** der Geberkolben (2) im Zylindergehäuse (1) mit einer Schnüffeleinrichtung ausgerüstet ist.

12. Vorrichtung nach Anspruch 11, **dadurch gekennzeichnet, dass** der Innenraum des Geberkolbens (2) als Ausgleichsbehälter (29) dient.

13. Vorrichtung nach einem der Ansprüche 1 bis 12, **dadurch gekennzeichnet, dass** die kreisringförmige Druckfläche (9) des Geberkolbens (2) als Rohrkolben (12) ausgestaltet ist.

14. Vorrichtung nach einem der Ansprüche 1 bis 11, **dadurch gekennzeichnet, dass** die kreisringförmige Druckfläche (9) des Geberkolbens (2) als Stufenkolben (14) ausgestaltet ist.

15. Vorrichtung nach einem der Ansprüche 1 bis 14, **dadurch gekennzeichnet, dass** auf den Geberkolben (2) eine Kompensationsfeder (6) einwirkt, die vorzugsweise in Pressrichtung des Geberkolbens (2) wirkt.

16. Vorrichtung nach einem der Ansprüche 1 bis 15, **dadurch gekennzeichnet, dass** der Geberkolben (2) mit einer Verdrehsicherung (8) ausgestattet ist.

## Claims

1. A device for operating a clutch, in particular a clutch in a motor vehicle, by means of a clutch operating apparatus that consists essentially of a slave cylinder that acts on the clutch, a master cylinder (1) in which a piston is guided, and a hydraulic line that connects the master cylinder (1) with the slave cylinder, the hydraulically pressurized end of the master piston (2) of the master cylinder (1) having the shape of a circular ring, **characterized in that** the master piston (2) is driven by an electric motor and the link between the electric motor (20) and master piston (2) is accomplished by means of a threaded drive (3), and the output shaft of the electric motor (20) overlaps axially a pressure chamber that is formed radially outside of the drive of the master cylinder (2).

2. The device according to Claim 1, **characterized in that** the threaded drive (3) is designed so that the threaded spindle (5) is positioned on the electric motor (20) and the threaded nut (4) on the master piston (2).

3. The device according to Claim 1, **characterized in that** the threaded drive (3) is designed so that the threaded nut (4) is positioned on the electric motor (20) and the threaded spindle (5) on the master piston (2).

4. The device according to Claim 2, **characterized in that** the threaded spindle (5) or the threaded nut (4) is formed on the rotor axis of the electric motor (20) as an integral part.

5. The device according to one of Claims 1 through 4, **characterized in that** the electric motor (20) is in the form of a stepper motor.

6. The device according to one of Claims 1 through 4, **characterized in that** the electric motor (20) is in the form of a direct current motor.

7. The device according to one of Claims 1 through 6, **characterized in that** the electric motor (20) is equipped with at least one rotation angle sensor.

8. The device according to Claim 7, **characterized in that** the rotation angle sensor is equipped as a Hall sensor.

9. The device according to one of Claims 1 through 8, **characterized in that** the master piston (2) is assigned to an absolute displacement measuring system which detects the axial position of the master piston (2).

10. The device according to one of Claims 1 through 9, **characterized in that** the electric motor (20) is controllable or regulatable over time with regard to torque and/or speed of rotation.

11. The device according to one of Claims 1 through 10, **characterized in that** the master piston (2) is equipped in the cylinder housing (1) with a sniffing device.

12. The device according to Claim 11, **characterized in that** the interior of the master piston (2) functions as an equalizing reservoir (29).

13. The device according to one of Claims 1 through 12, **characterized in that** the circular ring shaped pressure surface (9) of the master piston (2) is in the form of a tubular piston (12).

14. The device according to one of Claims 1 through 11, **characterized in that** the circular ring shaped pressure surface (9) of the master piston (2) is in the form of a step piston (14).

15. The device according to one of Claims 1 through 14, **characterized in that** a compensation spring (6) which preferably operates in the pressure direction of the master piston (2) acts on the master piston (2).

16. The device according to one of Claims 1 through 15, **characterized in that** the master piston (2) is equipped with an autorotation protection device (8).

## Revendications

1. Dispositif pour actionner un embrayage, notamment un embrayage dans un véhicule automobile, au moyen d'un dispositif d'actionnement d'embrayage, qui est essentiellement constitué d'un cylindre récepteur agissant sur l'embrayage, d'un maître-cylindre (1), dans chacun desquels est guidé un piston, et d'un parcours ou circuit de liaison hydraulique qui relie le maître-cylindre (1) au cylindre récepteur, et dans lequel la face frontale alimentée hydrauliquement du piston maître (2) du maître-cylindre (1) est de forme annulaire circulaire, **caractérisé en ce que** le piston maître (2) est entraîné par moteur électrique, et la liaison entre le moteur électrique (20) et le piston maître (2) s'effectue au moyen d'une transmission à vis (3), et l'arbre de sortie du moteur électrique (20) chevauche axialement une chambre de pression formée par le piston maître (2) radialement à l'extérieur de l'entraînement.

2. Dispositif selon la revendication 1, **caractérisé en ce que** la transmission à vis (3) est réalisée de la manière suivante, à savoir que la vis ou broche filetée (5) est disposée sur le moteur électrique (20) et l'écrou fileté (4) est agencé sur le piston maître (2).

3. Dispositif selon la revendication 1, **caractérisé en ce que** la transmission à vis (3) est réalisée de la manière suivante, à savoir que l'écrou fileté (4) est disposé sur le moteur électrique (20) et la vis ou broche filetée (5) est agencée sur le piston maître (2).

4. Dispositif selon la revendication 2, **caractérisé en ce que** la vis ou broche filetée (5) ou l'écrou fileté (4) est formé d'un seul tenant sur l'axe de rotor du moteur électrique (20).

5. Dispositif selon l'une des revendications 1 à 4, **caractérisé en ce que** le moteur électrique (20) est réalisé en tant que moteur pas à pas.

6. Dispositif selon l'une des revendications 1 à 4, **caractérisé en ce que** le moteur électrique (20) est réalisé en tant que moteur à courant continu.

7. Dispositif selon l'une des revendications 1 à 6, **caractérisé en ce que** le moteur électrique (20) est équipé d'au moins un capteur d'angle de rotation.

8. Dispositif selon la revendication 7, **caractérisé en ce que** le capteur d'angle de rotation est conçu sous la forme d'un capteur de Hall.

9. Dispositif selon l'une des revendications 1 à 8, **caractérisé en ce qu'**au piston maître (2) est associé un système de mesure de déplacement absolu, qui relève la position axiale du piston maître (2).

10. Dispositif selon l'une des revendications 1 à 9, **caractérisé en ce que** le moteur électrique (20) est conçu de manière à pouvoir être commandé ou régulé dans le temps, relativement au couple et/ou à la vitesse de rotation.

11. Dispositif selon l'une des revendications 1 à 10, **caractérisé en ce que** le piston maître (2) dans le carter de cylindre (1) est équipé d'un dispositif de reniflard.

12. Dispositif selon la revendication 11, **caractérisé en ce que** l'espace intérieur du piston maître (2) sert de réservoir de compensation (29).

13. Dispositif selon l'une des revendications 1 à 12, **caractérisé en ce que** la surface active de pression (9) de forme annulaire circulaire du piston maître (2) est réalisée en tant que piston tubulaire (12).

14. Dispositif selon l'une des revendications 1 à 11, **caractérisé en ce que** la surface active de pression (9) de forme annulaire circulaire du piston maître (2) est réalisée en tant que piston étagé (14).

15. Dispositif selon l'une des revendications 1 à 14, **caractérisé en ce que** sur le piston maître (2) agit un ressort de compensation (6), qui agit de préférence dans la direction de refoulement sous pression du piston maître (2).

16. Dispositif selon l'une des revendications 1 à 15, **caractérisé en ce que** le piston maître (2) est doté d'un système d'arrêt de rotation (8).
